# EUROPEAN PATENT APPLICATION

(11) **EP 1 834 548 A1**
(43) Date of publication of application: **19.09.2007**
(21) Application number: 06111136.5
(22) Date of filing: 14.03.2006
(51) Int. Cl.: A47F 3/00, A47F 11/10, G09F 13/04, G09F 13/08, G09F 13/22, F21V 15/04, F21V 33/00, B32B 17/10, E04D 3/06, E06B 3/66

(54) **Glass product**

(71) Applicant: GLAVERBEL, 1170 Bruxelles (BE)
(72) Inventor: Lefevre Hugues GLAVERBEL Centre R&D, 6040 Jumet (BE)
(74) Representative: Farmer, Guy Dominic

(57) **Abstract**

A mat or surface treated upper surface is provided on the exterior, upper surface of a laminated glazing panel incorporating LEDs.

## Description

This invention relates to a glass product incorporating a plurality of light emitting diodes (LEDs).

According to a first aspect, the present invention provides a panel as defined in Claim 1.

The dependent claims define features of preferred or alternative embodiments of the invention.

Other aspects of the invention are defined in other independent claims.

The panel may be a glazing panel and/or a lighting panel or a shelf.

The surface treatment may be provided by one or more of:
- providing a mat finish to the surface of the glass
- acid etching the surface
- sand blasting the surface
- providing a surface relief, for example using a patterned glass
- applying a paint or lacquer to the surface.

The translucent surface of the surface allows light to pass there through whilst causing sufficient diffusion to avoid clear vision there through.

The invention is particularly but not exclusively applicable to horizontal glass structures. The surface treatment may hide the presence of dust, dirt or imperfections from view. This may be particularly applicable where the panel provides a lighting structure to be suspended from a ceiling or supported close to but below ceiling level.

The panel incorporating the surface treatment may have a one or more of the following properties:
- A light transmission of at least 50 %, preferably at least 70% and more preferably at least 80%;
- A haze of at least 70% preferably at least 80% and more preferably at least 90%;
- A clarity of less than 50%, preferably less than 30 % and more preferably less than 20%.

Where the panel is a lighting panel, it may have dimensions of at least 30cm by 50cm; it may have dimensions of at least 50cm by 80 cm or at least 60cm by 180 cm.

Where the panel is a shelf, it may have dimensions of at least 20cm by 60 cm, preferably at least 30 cm by 1.2 m.

The glass substrates are preferably flat soda lime glass, particularly float glass. One or both of the glass sheets may be clear glass, extra clear glass or body tinted glass.

The electrically conducting pathways may be provided by an electrically conducting coating layer provided directly on one of the surfaces of one of the glass sheets. This may be a sputtered coating stack which may have a physical thickness in the range of 5 nm to 300 nm, for example a coating stack comprising ITO or silver. Alternatively, it may be a pyrolytic coating, particularly one deposited by chemical vapour deposition, which may have a thickness in the range of 100 nm to 5000 nm, for example a coating comprising tin oxide doped with fluorine or antimony. The sheet resistance of the conducting coating layer may be within the range of 1 to 6 ohms/square or within the range of 2 to 20 ohms/square. Interruptions may be provided in the conductive coating layer so as to define one or more electrical pathways; such interruptions may be provided by masking during deposition of the coating layer or by ablation, for example laser ablation, chemical etching or abrasion. Provision of the electrically conducting pathways directly on one of the surfaces of one of the glass sheets, particularly in the form of a coating layer, may facilitate cutting to size of the semi-finished panels as the electrically conducting pathway may be cut at the same time as the glass is cut to size without requiring an additional cutting operation.

Alternatively, the electrically conductive pathways may be provided by an electrically conductive coating layer provided on a substrate, for example a PET film, arranged between and laminated to each of the first and second glass sheets, for example via layers of PVB (polyvinylbutyral). In this case, the coating layer may be a sputtered coating layer as referred to above.

Use of a substantially transparent electrically conductive coating layer may be preferable when some or all of the LEDs are arranged to provide illuminate that will pass through the electrically conducting pathway.

The first and second glass sheets may be laminated together to form a laminated assembly by a plastics interlayer which comprises one or more sheets of PVB or a resin, for example EVA. The plastics interlayer may be substantially transparent; it may be neutral or clear in colour or it may be body tinted.

Preferably, the majority and more preferably substantially the entire surface area of the panel is provided with LEDs, that is to say that the LEDs form an array of spaced LEDs with the array covering greater than 50%, 60%, 70%, 80% or 90% of the surface area of the panel.

The panel may incorporate at least 50, 100 or 200 LEDs.

The first and second glass sheets preferably have a thickness within the range of 2.5 mm to 10 mm.

The panel may have a mechanical resistance as defined in European Standard EN12600 (often referred to as the pendulum test) of 3B3, preferably 2B2 and more preferably 1B1.

Non-limiting embodiments of the invention are described with reference to the accompanying drawings of which
Fig 1 is a plan view of the underside of a glass shelf;
Fig 2 is a plan view of the upper surface of the glass shelf;
Fig 3 is an expanded cross section.

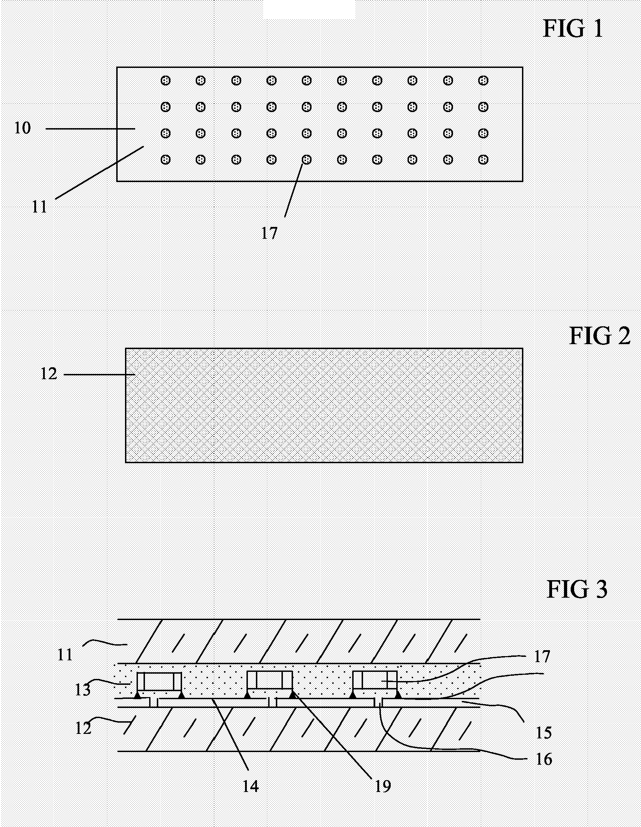

Shelf 10 comprises first 11 and second 12 flat, clear, 3mm thick soda lime float glass sheets laminated together by means of a 0.76 mm thick sheet of PVB 13. The inner surface 14 of the second glass sheet 12 is provided with a substantially colour neutral CVD coating stack 15 comprising an SiOxCy undercoat and an overlying Sn02:F coating. Interruptions 16 in the coating stack 15 formed by laser ablations about 70 microns wide define electrically conducting pathways between LEDs 17 which are soldered or attached with an electrically conductive adhesive 19 either side of the laser ablations 16. Each LED is in direct contact with the coating 15 of the second glass sheet 12, the spacing shown in FIG 3 being schematic and not representative of the actual positioning. Additional laser ablations 18 divide the array of LEDs 17 in to individual lines of LEDs which are connected in series.

The LEDs are adapted to provide illumination through the first glass sheet 11, i.e. without passage through or hindrance by the conductive pathways provided by the coating layer 15.

The shelf has dimensions of about 30 cm x 1.2 m and comprises about 115 LEDs arranged in a regular grid at 5cm intervals such that the array of diodes covers substantially the entire area of the semi-finished glass panel.

The lower face of the shelf, i.e. the exterior face of the first glass sheet is an ordinary surface or a float glass sheet.

The upper surface of the shelf, i.e. the exterior surface of the second glass sheet 12, as shown in Fig 2, is a translucent acid etched surface. This may be provided by a MATELUX glass sold by Glaverbel.

It may also be possible to turn the panel of the invention around and to use it the other way up.

## Claims

1. A panel adapted to be installed in a substantially horizontal orientation comprising spaced first and second glass substrates having a plurality of LEDs arranged between the glass substrates and adapted to emit light downwardly through the first glass substrate
in which the exterior face of the second glass substrate comprises a surface treatment over substantially the whole of its surface which renders it translucent.

2. A panel in accordance with claim 1, in which the surface treatment provides a mat surface.

3. A panel in accordance with claim 2, in which the surface treatment is an acid etched mat surface.

4. A panel in accordance with any preceding claim, in which adjacent LEDs are connected via electrical pathways defined in a coating layer incorporated in the interior of the panel structure.

5. A lighting unit comprising a panel in accordance with any preceding claim.

6. A shelf comprising a panel in accordance with any preceding claim.

7. Use of a matted surface on the exposed upper surface of a panel to hide the presence of dust, dirt or imperfections in a panel structure adapted to be installed substantially horizontally and comprising spaced first and second glass substrates having a plurality of LEDs arranged between the glass substrates and adapted to emit light downwardly through the first glass substrate.
